# EUROPEAN PATENT APPLICATION

(11) **EP 3 208 506 A1**
(43) Date of publication of application: **23.08.2017**
(21) Application number: 17156211.9
(22) Date of filing: 15.02.2017
(51) Int. Cl.: F16K 3/18

(54) **GATE VALVE**

(30) Priority: 16.02.2016 EP 16155953
(71) Applicant: BEL VALVES LIMITED, St Peters Newcastle upon Tyne NE6 1BS (GB)
(72) Inventor: Holmset, Ingolf Fra, Lerkerinden 34 5099 Bergen (NO)
(74) Representative: Vinsome, Rex Martin

(57) **Abstract**

A valve apparatus (2) for sealing connection to first and second parts (6, 8) of a conduit is disclosed. The valve apparatus comprises first (14) and second (16) valve members moveable between first positions thereof, in which the valve members are sealingly connected to respective first and second parts of a conduit in a first valve setting, and second positions thereof, in which the valve members are sealingly connected to the respective first and second parts in a second valve setting. Actuator members (24, 26) are moveable relative to the valve members for moving the valve members into the first and second valve settings.

## Description

The present invention relates to a valve apparatus for controlling fluid flow along a conduit and relates particularly, but not exclusively, to a valve apparatus for controlling fluid flow in the petroleum industry.

Gate valves are used to control the flow of fluid along a conduit, such as water in a water pipe or extracted oil in an undersea conduit. Gate valves can be moved between a fully open condition, to present an open passage to the fluid, and a fully closed condition, to prevent fluid flow altogether.

In very high pressure environments, such as undersea pipelines, robust gate valves are required to form effective seals against fluid flowing along the pipelines, and to prevent the fluid from escaping the pipelines into the body of the gate valve when in a condition allowing the fluid to flow along the conduit.

US patent 7975983 discloses a valve apparatus comprising actuation means having a diamond-shaped cross-section which engages a pair of valve members in first and second valve settings to sealingly connect to first and second parts of a conduit. In order for a sealing connection to be made between the valve apparatus and the conduit in both the first and the second valve settings, the distribution of sealing force exerted by the actuating means on the valve members necessarily does not cover an area equal to or larger than the cross-sectional area of the conduit in both valve settings. In particular, when the valve members are in their raised position relative to the actuation means, the sealing force is applied predominantly below the longitudinal axis of the conduit, and when the valve members are in their lowered position relative to the actuation means, the sealing force is applied predominantly above the longitudinal axis of the conduit. This in turn causes the drawback that the sealing force varies widely around the periphery of the conduit and a large force must be applied to the sealing members to achieve an adequate sealing effect.

Preferred embodiments of the present invention seek to overcome one or more of the disadvantages of the prior art.

According to an aspect of the present invention, there is provided a valve apparatus for sealing connection to first and second parts of a conduit, the valve apparatus comprising: at least one first valve member moveable between a first position thereof, in which said first valve member is sealingly connected to a first part of a conduit in a first valve setting, and a second position thereof, in which said first valve member is sealingly connected to said first part of said conduit in a second valve setting; at least one second valve member moveable between a first position thereof, in which said second valve member is sealingly connected to a second part of said conduit in said first valve setting, and a second position thereof, in which said second valve member is sealingly connected to said second part of said conduit in said second valve setting; and actuator means moveable relative to said first and second valve members for moving said first and second valve members into said first and second valve settings, the actuator means comprising: (i) at least one first engaging surface for slidably engaging said first valve member for urging said first valve member into said first valve setting; (ii) at least one second engaging surface for slidably engaging said first valve member for urging said first valve member into said second valve setting; (iii) at least one third engaging surface for slidably engaging said second valve member for urging said second valve member into said first valve setting; and (iv) at least one fourth engaging surface for slidably engaging said second valve member for urging said second valve member into said second valve setting wherein a position of engagement of at least one said first engaging surface with said first valve member is separated from a position of engagement of at least one said second engaging surface with said first valve member in a direction transverse to a direction of movement of said first valve member into said first and second valve settings and transverse to a direction of movement of the actuator means relative to the first valve member; and wherein a position of engagement of at least one said third engaging surface with said second valve member is separated from a position of engagement of at least one said fourth engaging surface with said second valve member in a direction transverse to a direction of movement of said second valve member into said first and second valve settings and transverse to a direction of movement of the actuator means relative to the second valve member.

By providing an apparatus in which a position of engagement of at least one first engaging surface with a first valve member is separated from a position of engagement of at least one second engaging surface with the first valve member in a direction transverse to a direction of movement of the first valve member into first and second valve settings and transverse to a direction of movement of the actuator means relative to the first valve member, and in which a position of engagement of at least one third engaging surface with a second valve member is separated from a position of engagement of at least one fourth engaging surface with the second valve member in a direction transverse to a direction of movement of the second valve member into the first and second valve settings and transverse to a direction of movement of the actuator means relative to the second valve member, this provides the advantage that a sealing force applied to the gate members by the actuating means can be evenly distributed over the parts of the valve members adjacent the conduit in both valve settings. This in turn enables more effective sealing action to be achieved by a given applied sealing force, which in turn minimises leakage of the valve apparatus.

The actuator means may comprise a plurality of said first and/or second surfaces arranged on opposite sides of at least one corresponding said second and/or first surface.

This provides the advantage that the sealing force may be distributed symmetrically over the parts of the valve members adjacent the conduit, thereby reducing or eliminating a net torque experienced by the valve apparatus during operation.

The actuator means may comprise a first actuator member and a second actuator member, wherein said first and second actuator members each include a respective said first, second, third and fourth engaging surface, and said first and second actuator members are adapted to engage said first and second valve members on opposite sides of said conduit.

This provides the advantage of enabling more uniform application of sealing force.

The first and second actuator members may be adapted to engage respective recesses in side surfaces of said first and second valve members.

The actuator means may further comprise at least one third actuator member slidably mounted to said first and second valve members for moving said first and second valve members relative to said conduit between said first and second valve settings.

The apparatus may further comprise sealing means for preventing escape of solid particles from said conduit between said first and second valve members in said first and/or said second valve setting.

This provides the advantage of avoiding malfunction of the apparatus as a result of accumulation of silt or dirt in the lower part of a housing of the apparatus.

The sealing means may be slidably mounted to said first and/or said second valve member.

The sealing means may include at least one flange integrally mounted to said first and/or said second valve member.

The first and second valve members may each have at least one respective aperture therethrough to allow fluid communication between said first and second parts of said conduit in at least one of said first and second valve settings.

This provides the advantage that the valve apparatus may allow the passage of fluid between the first and second parts of the conduit while maintaining an even sealing force around the conduit's circumference.

The valve apparatus may be adapted to prevent fluid flow between said first and second parts of said conduit in at least one of said first and second valve settings.

This provides the advantage that ingress of abrasive particles carried in fluid into the valve housing is minimised.

At least one said first engaging surface may be inclined relative to at least one said third engaging surface, and at least one said second engaging surface may be inclined relative to at least one said fourth engaging surface.

This provides the advantage that the component of sealing force applied to the gate members by the actuating means may be have a linear relationship with distance travelled by the valve members.

A preferred embodiment of the invention will now be described, by way of example only and not in any limitative sense, with reference to the accompanying drawings, in which:-
Figure 1 is a cross sectional side view of a valve apparatus of a first embodiment of the present invention in a first valve setting thereof;
Figure 2 is a cross section side view of a lower part of the apparatus of Figure 1, showing the lower part of an actuator member thereof;
Figure 3 is a perspective view of first and second valve members of the apparatus of Figure 1, together with first and second actuator members thereof;
Figure 4 is a partially cut away perspective view, corresponding to Figure 3, but cut away along the line III-III in Figure 3;
Figure 5 is a perspective view of the second actuator member of Figures 3 and 4;
Figure 6 is a schematic side cross-sectional view of part of a valve apparatus of a second embodiment of the present invention; and
Figure 7 is a schematic side cross-sectional view, corresponding to Figure 6, of part of a valve apparatus of a third embodiment of the present invention.

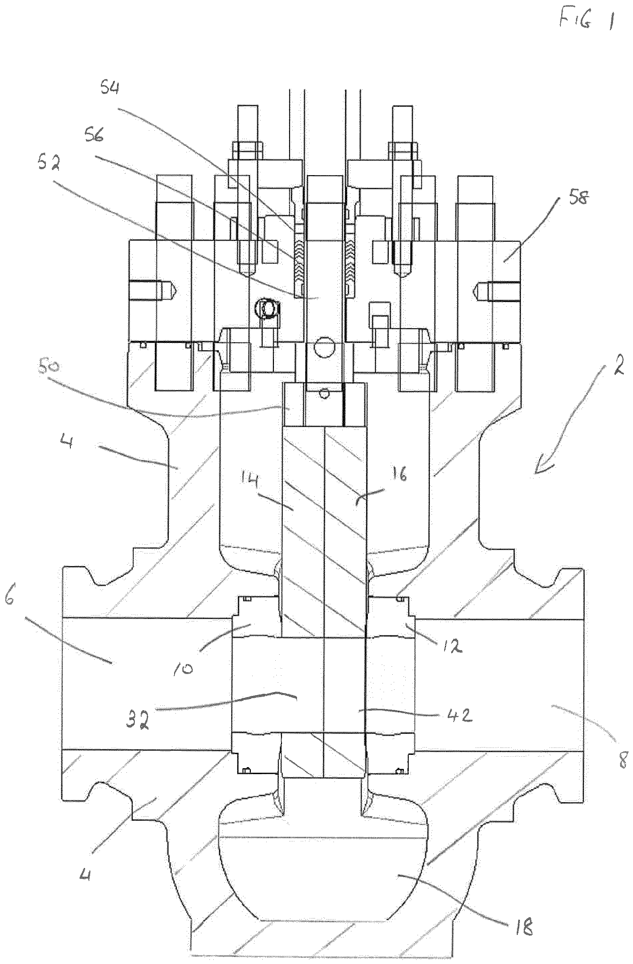

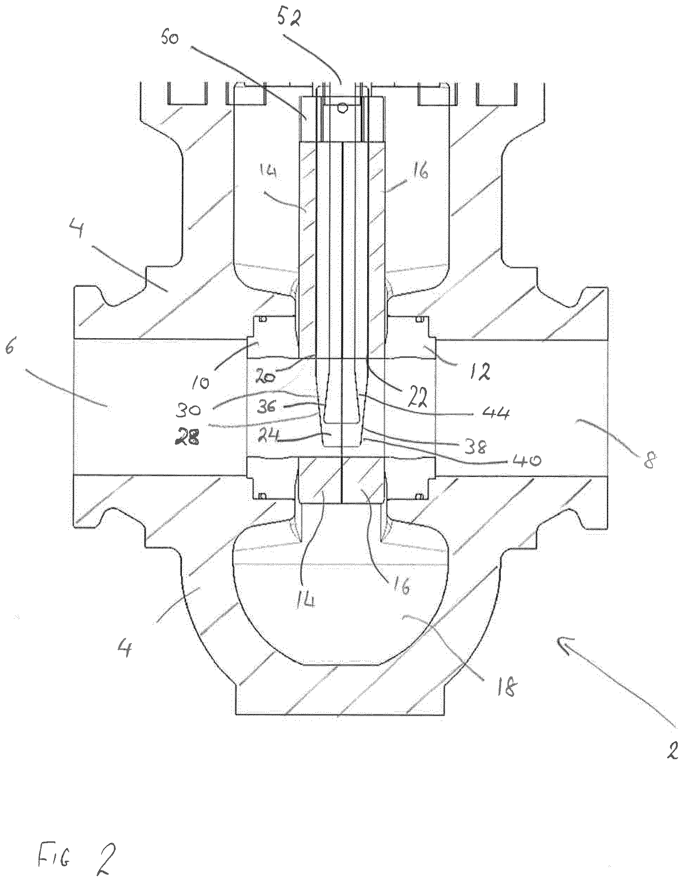

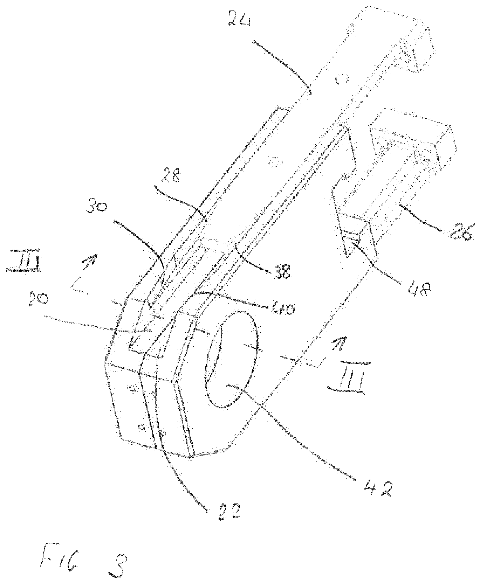

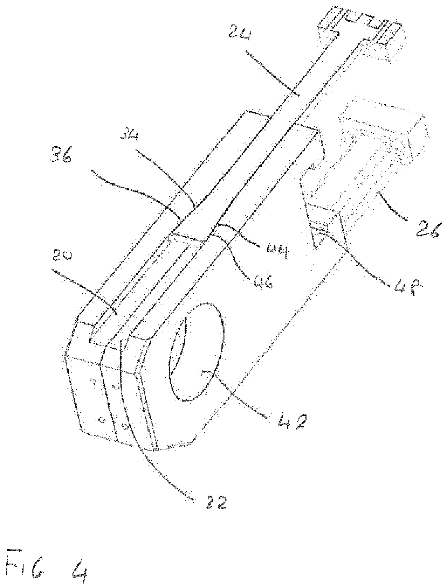

Referring to Figures 1 and 2, a valve apparatus 2 embodying the present invention has a solid body 4 of metal or other suitable material and having a first bore 6 therethrough for connection to a first part of a conduit (not shown) and a second bore 8 therethrough for connection to a second part of the conduit (not shown). The ends of the first 6 and second 8 bores are provided with respective valve seats 10, 12 for sealing engagement with a respective first valve member 14 and second valve member 16 when the apparatus 2 is in a first valve setting in which the valve members 14, 16 are raised relative to the body 4 as shown in Figures 1 and 2, and a second valve setting in which the valve members 14, 16 are lowered relative to the body 4, so that the lower extremities of the valve members 14, 16 extend into a hollow portion 18 at the base of the body 4, as shown in Figures 3 and 4.

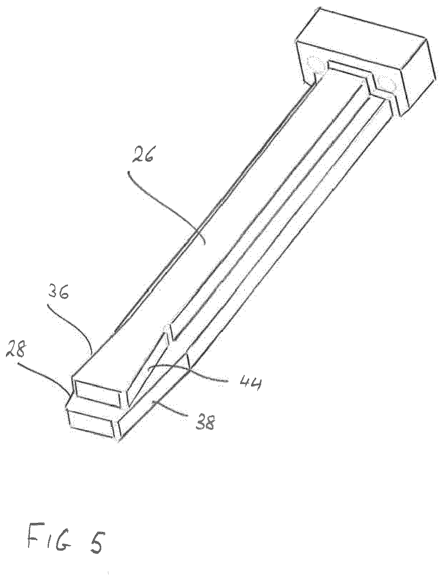

Referring to Figures 3 and 4, the first 14 and second 16 valve members are provided with respective recesses 20, 22 in their side faces, the recesses 20, 22 opposing each other to slidably receive actuator means in the form of first 24 and second 26 actuator members. As shown in greater detail in Figures 3 and 5, each actuator member 24, 26 is provided with a first engaging surface 28 which is inclined relative to a direction of sliding movement of the first and second valve members 14, 16 relative to the actuator members 24, 26, and engages an inclined surface 30 on an inner surface of recess 20 of first valve member 14. As a result, as the first valve member 14 is moved upwards relative to the first actuator member 24 as shown in Figure 1, the first actuator member 24 urges the first valve member 14 into engagement with valve seat 10 so that the valve member 14 seals against the valve seat 10 but an aperture 32 in the first valve member 14 is arranged in generally co-axial communication with the first bore 6.

As shown in greater detail in Figures 4 and 5, each actuator member 22, 24 is also provided with a second engaging surface 34 which is inclined relative to a direction of sliding movement of the valve members 14, 16 relative to the actuator members 22, 24 and engages an inclined surface 36 on an inner surface of recess 20 so that as the valve members 14, 16 are moved downwards relative to the actuator members 24, 26 as seen in Figure 1, engagement of the second engaging surface 34 with the inclined surface 36 urges the first valve member 14 into sealing engagement with valve seat 10 in the second valve setting so that aperture 32 in valve member 14 is not in communication with first bore 6.

Similarly, the actuator members 24, 26 are each provided with a third engaging surface 38 for co-operating with an inclined surface 40 in recess 22 of second valve member 16, so that as the second valve member 16 moves upwards relative to the actuator members 24, 26 as seen in Figure 1, the second valve member 16 is urged into sealing engagement with valve seat 12 so that an aperture 42 in the second valve member 16 is in generally co-axial communication with the second bore 8. In the first valve setting, therefore, fluid communication between first 6 and second 8 bores is possible via first 32 and second 42 apertures in respective valve members 14, 16.

Similarly, the actuator members 22, 24 are each provided with a fourth engaging surface 44 for engaging an inclined surface 46 in recess 22 so that as the valve members 14, 16 move downwards relative to the actuator members 22, 24, the valve member 16 is urged into sealing engagement with the valve seat 12 such that aperture 42 is not in communication with bore 8.

The valve members 14, 16 are each provided with a generally rectangular recess 48 in an upper part thereof for slidably receiving a head 50 of third actuator member 52 for moving the valve members 14, 16 vertically relative to the housing 4. The third actuator member 52 is slidably mounted through aperture 54 in body 4 via seal 56 in sealing cover 58 of the body 4.

As can be seen from Figures 3 to 5, the engaging surfaces 28, 38 of each actuator member 24, 26 engage the corresponding inclined surfaces 30, 40 in a space separated, in a direction transverse to the direction of sliding of the actuator members 24, 26 relative to the valve members 14, 16, from a space in which the corresponding engaging surfaces 34, 44 engage the corresponding inclined surfaces 36, 46. This allows engagement of the actuator members 24, 26 with the valve members 14, 16 to occur in a region generally on opposite lateral sides of the conduit and enabling the valve sealing force to be applied generally axially centrally and across the entire with of the apertures 32, 42. This in turn enables the maximum sealing effect to be achieved for a given applied valve sealing force.

As the valve members 14, 16 are moved apart in the first and second valve settings, the valve members 14, 16 can slide relative to head 50 of third actuator member 54 by virtue of sliding engagement of the head 50 in recesses 48. In the embodiment shown in Figure 1, the actuator members 24, 26 are fixed in position relative to the body 4, but it will be appreciated by persons skilled in the art that some movement of the actuator members 24, 26 relative to the body 4 could also be possible for further control of application of the valve sealing force.

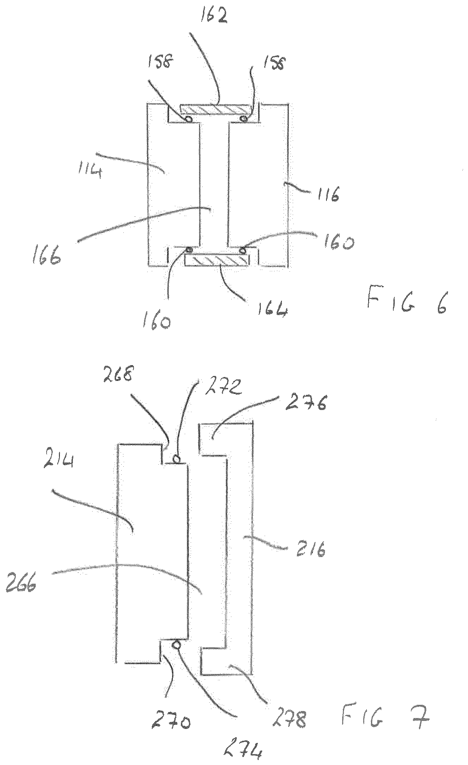

Referring to Figure 6, part of a valve apparatus of a second embodiment of the invention is shown, in which parts common to the embodiment of Figures 1 to 5 are denoted by like reference numerals but increased by 100. Valve members 114, 116 are provided with upper seals 158 and lower seals 160 which co-operate with respective upper 162 and lower 164 cover plates which are slidable relative to the one or both valve members 114, 116. This provides the advantage of preventing silt or dirt from escaping from gap 166 between the valve members 114, 116 when the valve members 114, 116 are in the first and second valve settings, which prevents silt or dirt from accumulating in hollow part 18 at the lower part of body 4. This in turn prevents the silt or dirt from becoming an obstacle to downward movement of the valve members 114, 116 into the second valve setting.

Referring to Figure 7, in which parts common to the embodiment of Figures 1 to 5 are denoted by like reference numerals but increased by 200, part of a valve apparatus of a third embodiment of the invention is shown. Escape of dirt or silt from gap 266 between valve members 214, 216 is shown, in which the first valve member 214 is provided with upper 268 and lower 270 recesses having respective upper 272 and lower 274 seals, and the second valve member 216 is provided with upper 276 and lower 278 flanges for engaging respective recesses 268, 270 to close gap 266.

It will be appreciated by persons skilled in the art that the above embodiments have been described by way of example only and not in any limitative sense, and that various alterations and modifications are possible without departure from the scope of the invention as defined by the appended claims.

## Claims

1. A valve apparatus (2) for sealing connection to first and second parts of a conduit, the valve apparatus comprising:-
at least one first valve member (14) moveable between a first position thereof, in which said first valve member is sealingly connected to a first part (10) of a conduit in a first valve setting, and a second position thereof, in which said first valve member is sealingly connected to said first part of said conduit in a second valve setting;
at least one second valve member (16) moveable between a first position thereof, in which said second valve member is sealingly connected to a second part (12) of said conduit in said first valve setting, and a second position thereof, in which said second valve member is sealingly connected to said second part of said conduit in said second valve setting; and
actuator means (24, 26) moveable relative to said first and second valve members for moving said first and second valve members into said first and second valve settings, the actuator means comprising:
(i) at least one first engaging surface (28) for slidably engaging said first valve member for urging said first valve member into said first valve setting;
(ii) at least one second engaging surface (34) for slidably engaging said first valve member for urging said first valve member into said second valve setting;
(iii) at least one third engaging surface (38) for slidably engaging said second valve member for urging said second valve member into said first valve setting; and
(iv) at least one fourth engaging surface (44) for slidably engaging said second valve member for urging said second valve member into said second valve setting;
wherein a position of engagement of at least one said first engaging surface with said first valve member is separated from a position of engagement of at least one said second engaging surface with said first valve member in a direction transverse to a direction of movement of said first valve member into said first and second valve settings and transverse to a direction of movement of the actuator means relative to the first valve member; and
wherein a position of engagement of at least one said third engaging surface with said second valve member is separated from a position of engagement of at least one said fourth engaging surface with said second valve member in a direction transverse to a direction of movement of said second valve member into said first and second valve settings and transverse to a direction of movement of the actuator means relative to the second valve member.

2. A valve apparatus according to claim 1, wherein said actuator means comprises a plurality of said first and/or second surfaces arranged on opposite sides of at least one corresponding said second and/or first surface.

3. A valve apparatus according to claim 1 or 2, wherein said actuator means comprises a first actuator member (24) and a second actuator member (26), wherein said first and second actuator members each include a respective said first, second, third and fourth engaging surface, and said first and second actuator members are adapted to engage said first and second valve members on opposite sides of said conduit.

4. A valve apparatus according to claim 3, wherein said first and second actuator members are adapted to engage respective recesses (20, 22) in side surfaces of said first and second valve members.

5. A valve apparatus according to any one of the preceding claims, wherein said actuator means further comprises at least one third actuator member (50, 52) slidably mounted to said first and second valve members for moving said first and second valve members relative to said conduit between said first and second valve settings.

6. A valve apparatus according to any one of the preceding claims, further comprising sealing means (58, 60, 62, 64, 68, 70, 72, 74, 158, 160) for preventing escape of solid particles from said conduit between said first and second valve members in said first and/or said second valve setting.

7. A valve apparatus according to claim 6, wherein said sealing means is slidably mounted to said first and/or said second valve member.

8. A valve apparatus according to claim 7, wherein said sealing means includes at least one flange integrally mounted to said first and/or said second valve member.

9. A valve apparatus according to any one of the preceding claims, wherein said first and second valve members each have at least one respective aperture (32, 42) therethrough to allow fluid communication between said first and second parts of said conduit in at least one of said first and second valve settings.

10. A valve apparatus according to any one of the preceding claims, wherein said valve apparatus is adapted to prevent fluid flow between said first and second parts of said conduit in at least one of said first and second valve settings.

11. A valve apparatus according to any one of the preceding claims, wherein at least one said first engaging surface is inclined relative to at least one said third engaging surface, and at least one said second engaging surface is inclined relative to at least one said fourth engaging surface.
